# EUROPEAN PATENT SPECIFICATION

(11) **EP 4 094 568 B1**
(45) Date of publication and mention of the grant of the patent: **11.06.2025**
(21) Application number: 22151753.5
(22) Date of filing: 17.01.2022
(51) Int. Cl.: A01D 90/08

(54) **AUTONOMOUS BALE RETRIEVAL SYSTEM**
AUTONOMES BALLENRÜCKHOLSYSTEM
SYSTÈME DE RÉCUPÉRATION DE BALLE AUTONOME

(30) Priority: 18.01.2021 US 202117151469
(43) Date of publication of application: 30.11.2022
(73) Proprietor: CNH Industrial Belgium NV, 8210 Zedelgem (BE)
(72) Inventor: Simmons,, Scott C., Lititz, 17543 (US); Cooley,, Devin, Shillington, 19607 (US); Smith,, Kevin M., Narvon, 17555 (US); Mortier,, Geert P., B-9000 Gent (BE)
(74) Representative: CNH Industrial IP Department

(56) References cited:
- US-A1- 2017 118 918
- US-A1- 2018 252 531
- US-B2- 10 104 824
- US-B2- 7 419 345

## Description

### BACKGROUND OF THE INVENTION

The present invention pertains to agricultural machines, and more particularly, to autonomous bale retrievers for locating and retrieving crop material bales in a field.

Agricultural harvesting machines, such as balers, are used to consolidate and package crop material so as to facilitate the storage and handling of the crop material for later use. In the case of hay, a mower-conditioner is typically used to cut and condition the crop material for windrow drying in the sun. In the case of straw, an agricultural combine discharges non-grain crop material from the rear of the combine defining the straw (such as wheat or oat straw) which is to be picked up by the baler. After the crop material has sufficiently dried, a baler which is typically towed by an agricultural vehicle will pick up the crop material and form it into bales.

A round baler may generally include a frame, supported by wheels, a pickup unit to engage and lift the crop material into the baler, a cutting unit, a main bale chamber for forming a bale, and a wrapping mechanism for wrapping or tying a material around the bale after it has been formed in the main bale chamber. As the baler is towed over a windrow, the pickup unit lifts the crop material into the baler. Then, the crop material may be cut into smaller pieces by the cutting unit. As the crop material enters the main bale chamber, multiple carrier elements, e.g. rollers, chains and slats, and/or belts, will begin to form a bale of hay within the chamber. These carrier elements are movable so that the chamber can initially contract and subsequently expand to maintain an appropriate amount of pressure on the periphery of the bale. After the bale is formed and wrapped by the wrapping mechanism, the bale is ejected out of the rear of the baler and onto the field.

Once the bale is formed, it needs to be transported from the field to a different location, such as a staging area, where the bale is stored. A bale retriever that includes a bale fork or similar pick up mechanism may be used to pick up multiple bales and move the bales to the staging area. Some bale retrievers are autonomous in that they automatically relocate the bales without direct operator control. However, such bale retrievers may not be capable of accurately identifying the locations of the bales in the field.

US 2018/252531 discloses a system including a mobile machine for collecting bales which are located across a field. The mobile machine is configured to collect a bale with a first bale carrier when moving in a forward direction and collecting a bale with a second bale carrier when moving in the reverse direction. A computing device is foreseen which is configured to receive location information of the location of the bales and this computing device will automatically determine the path to follow to collect the bales, using this location information.

US 10 104 824 describes the use of self-powered, autonomous vehicles that include a self-propelled drive system, tracks or wheels operatively connected to the drive system, a power supply operatively connected to the drive system, an attachment mechanism for attaching equipment to the vehicle and an intellectual control operatively connected to the drive system, power supply and attachment mechanism. One such an attachment mechanism is a bale collecting device having a vision system to identify the best way to pick up a bale determined on the type of bale which needs picking up. It is possible to move one or more of the autonomous vehicles from field to field, home to field or from generally any first location to a second location.

What is needed in the art is an autonomous bale retrieving system for efficiently locating and transporting bales.

### SUMMARY OF THE INVENTION

Exemplary embodiments disclosed herein provide an autonomous bale retriever with a bale location sensor and a controller which is operably coupled to the bale location sensor. The controller is configured to receive bale drop location information and receive at least one bale feature signal from bale location sensor. The controller is also configured to identify an exact bale location of the bale based at least partially on the bale drop location information and the at least one bale feature signal from the at least one sensor, generate a steering control signal based at least partially on the exact bale location, and output the steering control signal to the steering assembly.

In one aspect of the present invention, there is provided a bale retriever as set forth in claim 1.

In another aspect of the present invention, there is provided a method for retrieving bales as set forth in claim 7.

Advantageously , the at least one bale feature of the bale may comprise a reflectance of one or more areas on the bale.

The controller may be configured to identify the exact bale location and the exact bale orientation based at least partially on the reflectance of one or more areas on the bale.

The at least one sensor may comprise an optical sensor and/or a LIDAR sensor.

The bale retriever may further comprise at least one lighting device carried by the chassis and configured to emit nonvisible light.

The controller may be further configured to generate a bale location map from the bale drop location information.

One possible advantage that may be realized by exemplary embodiments disclosed herein is that the system may generate a bale location map and subsequently determine the exact location of the bales in order to facilitate the automatic retrieval of bales in a field.

Another possible advantage that may be realized by exemplary embodiments disclosed herein is that the controller of the bale retriever may generate 3D image data of the bale by sensing the amount of light emitted by the wrapping material and/or the crop material within the bale.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates a schematic view of a bale forming and retrieval system, the system including an agricultural vehicle, a baler, and a bale retriever, in accordance with an exemplary embodiment of the present invention;
FIG. 2 illustrates a bale in one orientation;
FIG. 3 illustrates another bale in another orientation; and
FIG. 4 illustrates a flowchart of an exemplary embodiment of a method for retrieving a bale, provided in accordance with the present disclosure.

### DETAILED DESCRIPTION OF THE INVENTION

The terms "forward", "rearward", "left" and "right", when used in connection with the agricultural vehicle and/or baler are usually determined with reference to the direction of forward operative travel of the agricultural vehicle, but they should not be construed as limiting. The term bale drop location information may refer to any information concerning the ejection cycle of the baler, including a heading, travel speed, coordinates of the bale ejection location, etc. The bale drop location information may include sensed bale feature(s) from the baler at the drop location. The term bale feature may refer to any characteristic or parameter concerning the bale, including the shape, size, weight, winding or rolling geometry, or density of the bale, the wrapping material around the bale, and/or the crop material within the bale.

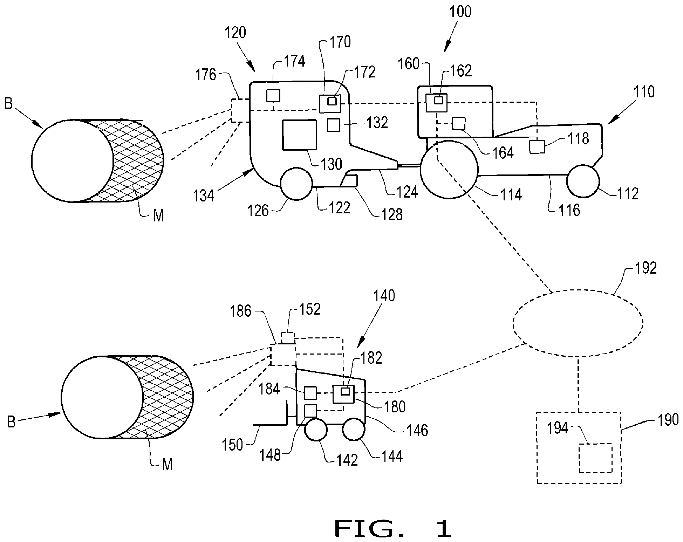

Referring now to the drawings, and more particularly to FIG. 1, there is shown a bale forming and retrieval system 100 for forming and retrieving bales B in a field. The system 100 generally includes at least one agricultural work vehicle 110, which tows a baler 120 in a forward direction of travel, and at least one bale retriever 140. The system 100 may automatically produce, locate, and retrieve the bales B. It should be appreciated that the system 100 may generally be utilized with work vehicles, balers, and/or baler retrievers which any suitable configuration. Additionally, for purposes of providing an example of a bale production and collection operation, the system 100 will generally be described herein with reference to performance of the bale production and collection operation following the example baling operation described herein. However, it should be appreciated that the system 100 may generally be utilized to perform a bale collection and transportation operation following the performance of any suitable baling operation within any suitable field.

The work vehicle 110 may include front and rear wheels and/or tracks 112, 114, a chassis 116, a prime mover, and a steering assembly 118 carried by the chassis 116. The work vehicle 110 may or may not include a cab for housing an operator. The steering assembly 115 may include variously configured valves and cylinders for steering the wheels and/or tracks 112, 114. As shown, the work vehicle 110 is configured as an agricultural tractor, such as an autonomous, semi-autonomous, or operator-driven tractor. However, in some embodiments, the work vehicle 110 may correspond to any other suitable vehicle configured to tow a baler across a field or that is otherwise configured to facilitate the performance of a baling operation itself, including an autonomous baling vehicle.

The work vehicle 110 may also include a controller 160, with a memory 162, and one or more sensor(s) 164 for sensing various operating parameters of the work vehicle 110. For example, the work vehicle 110 may include a positioning sensor or device 164, such as a global positioning system (GPS) or the like, which tracks the position of the work vehicle 110. The work vehicle 110 may also include a speed sensor, inclinometer, moisture content sensor, etc.

The baler 120 produces crop material bales and deposits the bales onto the field. As shown, the baler 120 is configured as a round baler configured to generate round bales. However, in some embodiments, the baler 120 may have any other suitable configuration, including being configured to generate square or rectangular bales. It should be further appreciated that the baler 120, while shown as being towed by a work vehicle 110, may also be a self-propelled baler that does not rely on a separate vehicle for propulsion and/or power to function. In such a configuration, the work vehicle 110 may not be included as part of the system 100.

As is generally known, the baler 120 generally includes a frame 122, a hitch or tongue 124 pivotally connected to the agricultural vehicle 110, a baler PTO shaft, and wheels 126. The baler 120 further includes a crop collector or pickup unit 128 connected to the frame 122, a bale chamber 130 connected to the frame 122, a wrapper 132, and a tailgate 134 (as shown schematically in FIG. 1).

In a bailing operation, crop material is lifted from windrows into the baler 120. The crop material is moved rearwardly toward the bale chamber 130, wherein the crop material is rolled into a bale of a predetermined size. The bale chamber 130 may be in the form of a continuously variable bale chamber 130. Hence, the bale chamber 130 may include multiple rolls or rollers, one or more cylinders and/or pivot arms coupled to the movable rollers, at least one belt, and a bale density pressure mechanism. Together, the rollers and the belt(s) may create a round circulating chamber which expands in between an empty bale position and a full bale position for engaging and rolling the bale B. When the bale reaches a predetermined size, the bale is wrapped with a wrapping material M by the wrapping mechanism or wrapper 132. The wrapping material M may be a mesh, twine, or stretchable net wrap. The wrapping material M may or may not be embedded with a reflective material. Once wrapped, the tailgate 134 opens to allow the bale B to roll out of the bale chamber 130 and onto a bale ejection mechanism, such as a kicker or a ramp. The ramp may move the bale rearwardly and deposit the bale onto the field or onto a bale holding device which is connected to the baler.

The baler 120 further includes a controller 170, with a memory 172, and one or more sensor(s) 174, 176 for sensing operational parameters of the baler 120 and/or features of the bale B. The baler controller 170 can be operably connected to the tractor controller 160 via an ISOBUS communication interface.

The baler 120 may include a positioning sensor or device 174. Additionally, the baler 120 may or may not include one or more baler sensor(s) 176 for sensing at least one bale feature of the bale B at its drop location. Thereby, after bale ejection, the sensor 176 may determine where the bale stopped relative to the baler 120. Each sensor 176 may be mounted to the baler 120, for example on the tailgate 134. Each sensor 176 may provide at least one bale feature signal to the baler controller 170 and/or vehicle controller 160, which may then correct or otherwise update the estimated bale drop location information in order to provide the actual bale location after it has stopped rolling after being ejected from the baler 120. Each sensor 176 may be in the form of any desired sensor, such as an optical sensor or a LIDAR sensor. It should be appreciated that the baler 120 may not include the bale detection sensor 176; and thereby, the baler 120 and/or the work vehicle 110 may only record the locations of the bale ejections. Additionally, each sensor 176, or another sensor of the baler 120, may also identify the rolling direction of a bale B during bale formation.

The bale retriever 140 may include front and rear wheels and/or tracks 142, 144, a chassis 146, a prime mover, a steering assembly 148 carried by the chassis 146, and a bale pick up or carrier 150 which contacts and picks up the bale B. As shown, the bale retriever 140 is a separate vehicle, distinct from the work vehicle 110 or baler 120, which may operate simultaneously within a field to produce and collect crop material bales. However, the bale retriever 140 may include any vehicle that can be used to collect bales standing within the field, including any suitable autonomous or semi-autonomous vehicle. In some embodiments, the bale retriever 140 may be in the form of the work vehicle 110, as discussed above, which has a bale pick up 150 attached thereto. For example, upon completion of the baling operation, the baler 120 may be unhitched from the work vehicle 110 and a suitable bale pick up 150 may be installed on the work vehicle 110 to allow for the collection of bales from the field. Furthermore, in some embodiments, the bale retriever 140 may be in the form of a self-propelled bale carrier.

The steering assembly 148 may be configured to be automatically and/or autonomously controlled to allow the bale retriever 140 to be directed along a predetermined path(s) across the field, either additionally or alternatively to manual control of the steering assembly 148. For example, in some embodiments, the steering assembly 148 may include or form part of an auto-guidance system for automatically steering the bale retriever 140. In such a configuration, the bale retriever 140 may correspond to a fully autonomous vehicle, a semi-autonomous vehicle, or an otherwise manually operated vehicle having one or more autonomous functions (e.g., automated steering or auto-guidance functions).

The bale pick up 150 can be removably connected to and carried by the chassis 146 of the bale retriever 140. The pick up 150 can be in the form of any desired mechanism. For instance, the pick up 150 can be in the form of forks, a bale spear, arms which may be actuated by one more actuators, or the like. The bale retriever 140 may also include additional devices, such as a holding platform or trailer, which operates in tandem with the bale pick up 150. For instance, the bale pick up 150 may lift the bales B from the field and, for example, place the bales B on a holding platform (which may include a conveyor).

Each bale retriever 140 further includes a controller 180, with a memory 182, and one or more retriever sensor(s) 184, 186 for sensing various operational parameters of the bale retriever 140 and/or features of the bale B. The bale retriever 140 may include a positioning sensor or device 184 which tracks the position of the bale retriever 140. Additionally, each bale retriever 140 may also include one or more sensor(s) 186 for sensing at least one bale feature of the bale B.

The retriever controller 180 is operatively coupled to the steering assembly 148 and the sensors 184, 186. The controller 180 is also operatively coupled to the steering assembly 148 and, in some embodiments, one or more other components of the bale retriever 140 (e.g., the engine and/or the transmission) for electronically controlling the operation of such component(s) (e.g. electronic control based on inputs received from the operator and/or automatic electronic control for executing one or more autonomous control functions).

The controller 180 may further be operatively coupled to one or more other work vehicle controller(s), vehicle controller(s) 160, baler controller(s) 170, and/or a data center 190 by way of a network 192 of the system 100. The data center 190 may also be configured to receive, process, and record data concerning with the system 100. The data center 190 may include at least one processor, such as an image processor, which conducts an algorithm, including a machine learning algorithm or other deep-learning artificial intelligence algorithm, to at least partially generate a bale location map 194 which indicates an exact and/or estimated location of the bales B on the field. It should be appreciated that the vehicle controller 160, the baler controller 170, the retriever controller 180, and/or the data center 190 may solely or collectively generate the bale location map 194 and/or conduct imaging processing for processing the signals, e.g. image data, from the sensors 176, 186. The bale location map 194 may be generated for the entire field or portions thereof such that the map may be created and updated in real-time as the baling operating is being carried out in the field. It should be appreciated that the network 192 may be any suitable network, including a wireless network having one or more processors or nodes. Additionally, the network 192 may broadly represent any combination of one or more data communication networks including local area networks, wide area networks, neural networks, etc., using a wired or wireless connection.

Each sensor 186 may be carried by the chassis 146 and connected to the front of the bale retriever 140. It is possible for each sensor 186 to be mounted onto a portion of the bale pick up 150. Each sensor 186 may provide at least one bale feature signal to the retriever controller 180. Each sensor 186 may sense one or more areas on the bale B. For instance, each sensor 186 may sense a reflectance of the wrapping material M and a reflectance of crop material in the bale B, which may be less reflective than the wrapping material M. Additionally or alternatively, the reflectance of a first area and a second area, for example an area of the bale B which receives less visible light and/or nonvisible light, may be sensed. Furthermore, additionally or alternatively, the reflectance of a reflective material placed on one or more sides of a round bale or square bale may be sensed. Hence, each sensor 176 and/or sensor 186 may sense the reflection of visible light and/or nonvisible of one or more areas on the bale B.

Each sensor 186 may be in the form of an optical sensor, such as a camera or RGB sensor, or a wave-ranging sensor, such as a radar or LIDAR sensor. If the sensor 186 is configured as a LIDAR sensor, then the LIDAR sensor may create a 3D image of the bale B to determine the specific bale location and orientation relative to the bale retriever 140. Therein, the sensor may use LIDAR technology to identify the flat surface versus the round surface of a round bale. Alternatively, the sensor 186 may be in the form of a camera which may generate image data to identify the location and/or orientation of the bale B. Each bale retriever 140 may include a single sensor 186. It should be appreciated that the bale retriever 140 may include two or more sensors 186, such as a LIDAR sensor and a camera. It should also be appreciated that each bale retriever 140 may not include the sensor(s) 186 for sensing bale feature(s). In such a configuration, the sensor 176 on the baler 120 may be the only sensor which senses the bale feature(s).

Each bale retriever 140 may also include one or more lighting device(s) 152 for emitting nonvisible light onto the bale B, as shown in phantom in FIG. 1. Each lighting device 152 may be carried by the chassis 146 and operably connected to the controller 180. If the wrapping material M is embedded with a fluorescent material, the nonvisible light may interact with the wrapping material M of the bale B which may cause the wrapping material M to fluoresce. If the sensor 186 is in the form of a camera, the additional nonvisible light from the lighting device 152 will help the camera more easily identify the wrapping material M and accordingly the round side or the long side of a bale. Each lighting device may be in the form of a light emitting diode (LED) or similar light. It is noted that each bale retriever 140 may or may not include the lighting device 152. Thus, the sensor 186 may sense visible light and/or nonvisible light which is reflected from the bale B. In another embodiment, one or more lighting device(s) 152 can be located on the baler 120, in addition or alternatively to the lighting device(s) 152 on each bale retriever 140.

In some embodiments, the controller 180 can receive the bale drop location information, the at least one bale feature signal from one or both of the sensors 176, 186, and any other desired information from the data center 190, the vehicle controller 160, and/or the baler controller 170. For instance, the controller 180 may also receive a time of day or estimated position of the sun, or other light source, in order to determine the orientation of the bale B. Thereafter, the controller 180 may identify an exact bale location and/or bale orientation of the bale B based at least partially on the bale drop location information and/or the at least one bale feature signal from one or both of the sensors 176, 186. The controller 180 can also generate the bale location map 194 independent of or in conjunction with the data center 190.

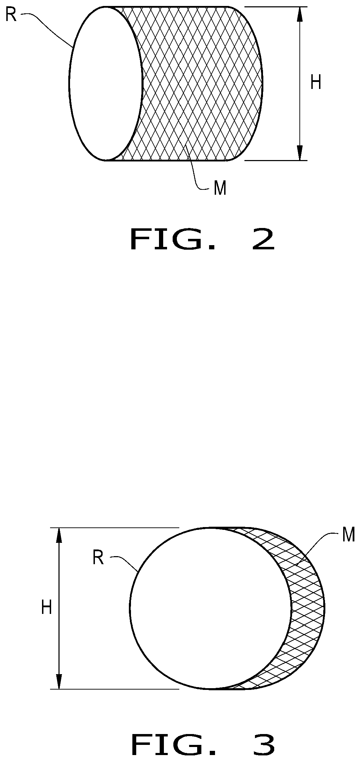

The controller 180 can identify the location and orientation of the bale so that the bale retriever 140 may engage the bale B on the desired side for proper transport. For a round bale, the controller 180 will identify and distinguish between the flat surface and the round surface. For a square bale, the controller 180 will identify and distinguish between a first, long side and a second, short side which has a smaller cross-sectional area than the long side. In the case of round bales, the controller 180 may identify the curved line corresponding to the outer perimeter of the bale B. The height H and the radius of curvature R of the vertical wall can be used to determine the orientation of the bale B. For instance, the radius of curvature R will be smaller if the round surface of the bale B is substantially facing the bale retriever 140 (FIG. 2) and larger if the flat surface is substantially facing the bale retriever 140 (FIG. 3). Hence, the controller 180 may correlate a given radius of curvature R to a corresponding bale orientation.

The controller 180 can also receive and/or identify the rolling direction of the bale B during bale formation. As can be appreciated, the wrap will have a tail hanging loose from the bale, and it may be advantageous to identify which direction the bale was rotated during formation to help retain the integrity of this tail during transport of the wrapped bale B. It should be appreciated that the rolling direction and/or tale orientation could be determined by the baler controller 170, being documented the bale ejection point, and/or by the retriever controller 180. For instance, the rolling direction of the bale B may be sensed by one or both sensors 176, 186 through identifying a color of the wrapping material M on a specific side of the bale B or by capturing image data and subsequently conducting image processing to identify the winding geometry on the flat surface of the bale B.

The controller 180 may also generate and output a steering control signal based at least partially on the exact bale location and/or the exact bale orientation to the steering assembly 148. Therein, the controller 180 automatically controls the operation of the bale retriever 140 via control of the steering assembly 148 such that the bale retriever 140 is moved across the field without any operator input (e.g., for autonomous vehicle operation and/or when otherwise operating in an autonomous mode). Additionally or alternatively, the controller 180 may be connected to the control mechanism, e.g. one or more hydraulic cylinders, of the pick up 150 so that the controller 180 may reposition the pick up 150, e.g. reorient an angle thereof relative to the bale retriever 140, to contact and lift the bale B.

In some embodiments, various data pertaining to the system and/or the field may be stored in one or more data centers, such as the remote data center 190 and/or the memory 182 of the retriever controller 180. Such data may, for instance, include any data collected during the performance of the prior baling operation, such as the position data associated with the location of the baling paths relative to the field, the heading data associated with the heading of the vehicle/baler along each baling path, and/or the position data associated with the specific location of each bale within the field. In addition, such data may include one or more operator inputs, one or more user-defined system preferences, and/or other system inputs relevant to one or more aspects of the present disclosure, such as data associated with the specific type of bales being collected (e.g., round bales vs. square/rectangular bales), data associated with the specific size of bales being collected (e.g., 4×5, 5×5, or 6×5), data associated with a desired or selected location for the staging area at which the bales will be aggregated, data associated with a desired spacing or arrangement of the collected bales within the staging area, and/or any other relevant data. Furthermore, such data can also include field data associated with the characteristics of the field, such as the topography of the field.

In some embodiments, the work vehicle controller 160 and/or the baler controller 170 may, for example, record the current GPS coordinates of the baler 120 each time the baler 120 ejects a bale B and output such GPS coordinates as the bale drop location information to the network 192. While the bale B may roll slightly after being ejected by the baler 120, the expected location of the bale B can be defined to be an area surrounding the GPS coordinates of the baler 120 at the bale drop location so the bale retriever 140 can head toward the expected location of the bale B and get relatively close to the bale B for retrieval.

In some embodiments, the controller 180 and/or data center 190 is configured to define the expected location of a bale B based at least partially on the baler travel path and one or more operating parameters of the work vehicle 110, the baler 120, and/or the field, such as a travel speed, a heading, a volume or weight of the bales B, an inclinometer reading of the work vehicle 110, topography data of the field, etc. The controller 180 may generate an expected zone or perimeter around respective GPS coordinates to signify the expected area for location of the bale B. For instance, the controller 180 may generate a circular perimeter of 5 meters, or approximately 16 feet circumferentially surrounding the GPS coordinates. Additionally, the controller 180 may alter the perimeter if data indicates a hill or slope is present. For instance, the controller 180 may generate an ellipsoidal perimeter to accommodate the slope of the field and projected movement of the bale B due to the slope of the field. However, it should be appreciated that the controller 180 and/or data center 190 may not be required define the zones or expected locations of the bales B. For instance, the baler 120 may deposit the bales B on one of their flat ends so that the bales B are not likely to move after being deposited onto the field.

In some embodiments, the controller 180 can operate the bale retriever 140 in various operating modes. For instance, the controller 180 can operate the bale retriever 140 in an energy-saving mode wherein the sensor 186 is turned off until the bale retriever 140 nears the estimated bale location, for example the zone surrounding the GPS coordinates. Then, the controller 180 may operate the bale retriever 140 in an active bale-searching mode wherein the sensor 186 is turned on and the controller 180 processes the sensor signals to identify the location and orientation of the bale B.

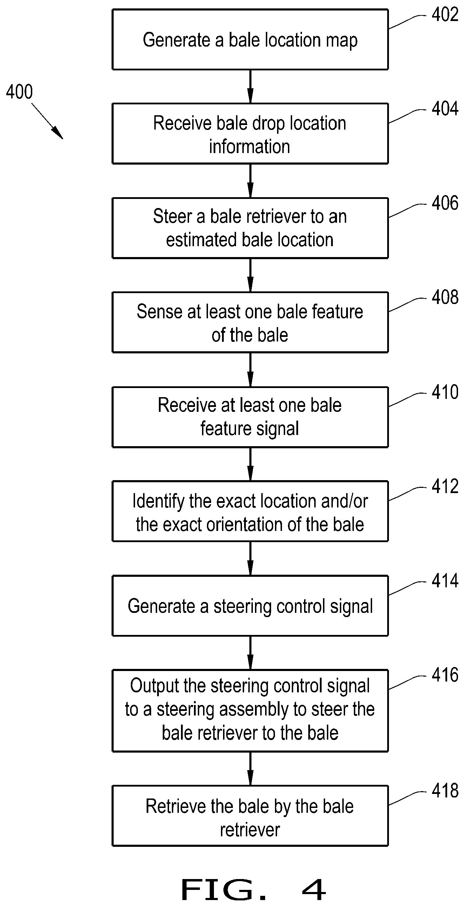

Referring now to FIG. 4, there is shown an exemplary embodiment of a method 400 for retrieving bales or otherwise operating the system 100. The bale location map 194 may be generated (at block 402). For instance, the data center 190 may generate the bale location map 194 from the bale drop location information, including bale ejection coordinates. Alternatively, if the data center 190 does not generate the bale location map 194, the controller 180 may generate the bale location map 194 from the bale drop location information. The controller 180 may receive any desired information from the vehicle controller 160, the bale controller 170, and/or the data center 194, such as the bale drop location information and/or the bale location map 194 of the estimated locations of the bales B (at block 404). The controller 180 may then steer or otherwise direct the bale retriever 140 to the general or estimated location of the bale B (at block 406). Thereafter, the sensor(s) 186 of the bale retriever 140 may sense at least one bale feature of the bale B (at block 408). The controller 180 may then receive the at least one bale feature signal from the sensor(s) 186 (at block 410). Then, the controller 180 may identify the exact bale location and/or the exact bale orientation of the bale B based at least partially on the bale drop location information, the bale location map 194, and/or the feature signal(s) from one or both of the sensors 176, 186 (at block 412). Thereafter, the controller 180 may generate a steering control signal based at least partially on the exact bale location (at block 414). Then, the controller 180 can output the steering control signal to the steering assembly 148 and accordingly steer the bale retriever 140 to the bale B (416). The controller 180 may also generate and output a bale pick up signal for adjusting a position of the pick up 150. The bale retriever 140 may then retrieve the bale B. Therein, the bale retriever 140 may collect one or more bale(s) B and transport the bale(s) B to the desired location.

It is to be understood that one or more of the steps of the method 400 can be performed by the retriever controller 180, the baler controller 170, the vehicle 160, and/or the data center 190 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller(s) 160, 180, 180 and/or data center 190 described herein, such as the method 400, is implemented in software code or instructions which are tangibly stored on a tangible computer readable medium. The controller(s) 160, 180, 180 and/or data center 190 load(s) the software code or instructions via a direct interface with the computer readable medium or via a wired and/or wireless network. Upon loading and executing such software code or instructions, the controller(s) 160, 180, 180 and/or data center 190 may perform any of the functionality of the controller controller(s) 160, 180, 180 and/or data center 190 described herein, including any step(s) of the method 400 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

These and other advantages of the present invention will be apparent to those skilled in the art from the foregoing specification. Accordingly, it is to be recognized by those skilled in the art that changes or modifications may be made to the above-described embodiments without departing from the of the invention as defined by the appended claims.

## Claims

1. A bale retriever (140) for retrieving bales (B), comprising:
a chassis (146);
a bale pick up (150) carried by the chassis (146) and configured to contact and pick up a bale (B);
a steering assembly (148) carried by the chassis (146) and configured to steer the bale retriever (140);
at least one sensor (176, 186) carried by the chassis (146) and configured to sense at least one bale feature of the bale (B) and provide at least one bale feature signal; and
a controller (180) operatively coupled to the steering assembly (148) and the at least one sensor (176, 186), the controller (180) being configured to:
receive bale drop location information; and
receive the at least one bale feature signal from the at least one sensor (176, 186);
the controller (180) is further configured to:
identify an exact bale location of the bale (B) based at least partially on the bale drop location information and the at least one bale feature signal from the at least one sensor (176, 186);
**and characterized in that;**
identify an exact bale orientation of the bale (B) based at least partially on the at least one bale feature signal from the at least one sensor (176, 186).
identify the exact bale orientation by initially identifying:
a round surface and a flat surface for a round bale; or
a first side and a second side which has a smaller cross-sectional area than the first side for a square bale;
generate a steering control signal based at least partially on the exact bale location; and
output the steering control signal to the steering assembly (148).

2. The bale retriever (140) of claim 1, wherein the at least one bale feature of the bale (B) comprises a reflectance of one or more areas on the bale (B).

3. The bale retriever (140) of claim 2, wherein the controller (180) is configured to identify the exact bale location and the exact bale orientation based at least partially on the reflectance of one or more areas on the bale (B).

4. The bale retriever (140) of claim 1, wherein the at least one sensor (176, 186) comprises an optical sensor (176, 186) and/or a LIDAR sensor (176, 186).

5. The bale retriever (140) of claim 1, further comprising at least one lighting device (152) carried by the chassis (146) and configured to emit nonvisible light.

6. The bale retriever (140) of claim 1, wherein the controller (180) is further configured to generate a bale location map from the bale drop location information.

7. A method (400) for retrieving bales using a bale retriever (140) of claim 1, the method (400) comprising the steps of:
receiving, by a controller (180), bale drop location information;
sensing, by at least one sensor (176, 186), the at least one bale feature of the bale, the at least one sensor (176, 186) being configured to provide the at least one bale feature signal;
receiving, by the controller (180), the at least one bale feature signal from the at least one sensor (176, 186);
identifying, by the controller (180), an exact bale location of the bale based at least partially on the bale drop location information and the at least one bale feature signal from the at least one sensor (176, 186);
identifying an exact bale orientation of the bale (B) based at least partially on the at least one bale feature signal from the at least one sensor (176, 186)
identifying the exact bale orientation by initially identifying:
a round surface and a flat surface for a round bale; or
a first side and a second side which has a smaller cross-sectional area than the first side for a square bale
generating, by the controller (180), the steering control signal based at least partially on the exact bale location; and
outputting, by the controller (180), the steering control signal to the steering assembly (148).

## Patentansprüche

1. Ballensammler (140) zum Einsammeln von Ballen (B) mit:
einem Fahrgestell (146);
einer Ballenaufnahme (150), die vom Fahrgestell (146) getragen wird und dazu eingerichtet ist, einen Ballen (B) zu berühren und aufzunehmen;
einer Lenkanordnung (148), die vom Fahrgestell (146) getragen wird und dazu eingerichtet ist, den Ballensammler (140) zu lenken;
mindestens einem Sensor (176, 186), der vom Fahrgestell (146) getragen wird und dazu eingerichtet ist, mindestens ein Ballenmerkmal des Ballens (B) zu erfassen und mindestens ein Ballenmerkmalsignal bereitzustellen; und
einer Steuereinheit (180), die operativ mit der Lenkanordnung (148) und dem mindestens einen Sensor (176, 186) gekoppelt ist, wobei die Steuereinheit (180) dazu eingerichtet ist:
Informationen über die Ballenabwurfposition zu empfangen; und
das mindestens eine Ballenmerkmalsignal von dem mindestens einen Sensor (176, 186) zu empfangen;
wobei die Steuereinheit (180) weiterhin dazu eingerichtet ist:
eine genaue Ballenposition des Ballens (B) zumindest teilweise basierend auf den Informationen über die Ballenabwurfposition und dem mindestens einen Ballenmerkmalsignal des mindestens einen Sensors (176, 186) zu identifizieren;
und **gekennzeichnet durch**:
eine genaue Ballenausrichtung des Ballens (B) zumindest teilweise basierend auf dem mindestens einen Ballenmerkmalsignal des mindestens einen Sensors (176, 186) zu identifizieren;
die genaue Ballenausrichtung durch anfängliche Identifikation folgender Merkmale zu bestimmen:
eine runde Fläche und eine flache Fläche für einen Rundballen; oder
eine erste Seite und eine zweite Seite mit einer kleineren Querschnittsfläche als die erste Seite für einen Quaderballen;
ein Lenksignal zumindest teilweise basierend auf der genauen Ballenposition zu erzeugen; und
das Lenksignal an die Lenkanordnung (148) auszugeben.

2. Ballensammler (140) nach Anspruch 1, wobei das mindestens eine Ballenmerkmal des Ballens (B) eine Reflektivität eines oder mehrerer Bereiche auf dem Ballen (B) umfasst.

3. Ballensammler (140) nach Anspruch 2, wobei die Steuereinheit (180) dazu eingerichtet ist, die genaue Ballenposition und die genaue Ballenausrichtung zumindest teilweise basierend auf der Reflektivität eines oder mehrerer Bereiche auf dem Ballen (B) zu identifizieren.

4. Ballensammler (140) nach Anspruch 1, wobei der mindestens eine Sensor (176, 186) einen optischen Sensor (176, 186) und/oder einen LIDAR-Sensor (176, 186) aufweist.

5. Ballensammler (140) nach Anspruch 1, der des Weiteren mindestens eine Beleuchtungsvorrichtung (152) aufweist, die vom Fahrgestell (146) getragen wird und dazu eingerichtet ist, nicht sichtbares Licht auszusenden.

6. Ballensammler (140) nach Anspruch 1, wobei die Steuereinheit (180) weiterhin dazu eingerichtet ist, eine Ballenpositionskarte aus den Informationen über die Ballenabwurfposition zu erstellen.

7. Verfahren (400) zum Einsammeln von Ballen unter Verwendung eines Ballensammlers (140) gemäß Anspruch 1, wobei das Verfahren (400) die folgenden Schritte aufweist:
Empfangen von Informationen über die Ballenabwurfposition durch eine Steuereinheit (180);
Erfassen des mindestens einen Ballenmerkmals des Ballens durch mindestens einen Sensor (176, 186), wobei der mindestens eine Sensor (176, 186) dazu eingerichtet ist, das mindestens eine Ballenmerkmalsignal bereitzustellen;
Empfangen des mindestens einen Ballenmerkmalsignals von dem mindestens einen Sensor (176, 186) durch die Steuereinheit (180);
Identifizieren einer genauen Ballenposition des Ballens zumindest teilweise basierend auf den Informationen über die Ballenabwurfposition und dem mindestens einen Ballenmerkmalsignal des mindestens einen Sensors (176, 186) durch die Steuereinheit (180);
Identifizieren einer genauen Ballenausrichtung des Ballens (B) zumindest teilweise basierend auf dem mindestens einen Ballenmerkmalsignal des mindestens einen Sensors (176, 186), wobei die genaue Ballenausrichtung durch anfängliche Identifikation folgender Merkmale bestimmt wird:
eine runde Fläche und eine flache Fläche für einen Rundballen; oder
eine erste Seite und eine zweite Seite mit einer kleineren Querschnittsfläche als die erste Seite für einen Quaderballen;
Erzeugen eines Lenksignals zumindest teilweise basierend auf der genauen Ballenposition durch die Steuereinheit (180); und
Ausgeben des Lenksignals an die Lenkanordnung (148) durch die Steuereinheit (180).

## Revendications

1. Un système de récupération de balles (140) pour récupérer des balles (B), comprenant :
un châssis (146) ;
un ramasseur de balles (150) soutenu par le châssis (146) et configuré pour entrer en contact avec une balle (B) et la ramasser ;
un ensemble de direction (148) soutenu par le châssis (146) et configuré pour diriger le système de récupération de balles (140) ;
au moins un capteur (176, 186) soutenu par le châssis (146) et configuré pour détecter au moins une caractéristique de balle de la balle (B) et fournir au moins un signal de caractéristique de balle ; et
un contrôleur (180) couplé fonctionnellement à l'ensemble de direction (148) et l'au moins un capteur (176, 186), le contrôleur (180) étant configuré pour :
recevoir des informations concernant l'emplacement de dépôt de balle ; et
recevoir l'au moins un signal de caractéristique de la balle en provenance de l'au moins un capteur (176, 186) ;
le contrôleur (180) est en outre configuré pour :
identifier l'emplacement de balle exact de la balle (B) en fonction au moins en partie des informations concernant l'emplacement de dépôt de balle et de l'au moins un signal de caractéristique de la balle provenant de l'au moins un capteur (176, 186) ;
et **caractérisé en ce que** ;
identifier l'orientation de balle exacte de la balle (B) en fonction au moins en partie de l'au moins un signal de caractéristique de la balle en provenance de l'au moins un capteur (176, 186) ;
identifier l'orientation de balle exacte en identifiant initialement :
une surface ronde et une surface plate pour une balle ronde ; ou
un premier côté et un second côté dont la section transversale est inférieure à celle du premier côté pour une balle carrée ;
générer un signal de commande de direction en fonction au moins en partie de l'emplacement de balle exact ; et
transmettre le signal de commande de direction à l'ensemble de direction (148).

2. Le système de récupération de balles (140) selon la revendication 1, dans lequel l'au moins une caractéristique de balle de la balle (B) comprend une réflectance d'une ou de plusieurs zones de la balle (B).

3. Le système de récupération de balles (140) selon la revendication 2, dans lequel le contrôleur (180) est configuré pour identifier l'emplacement de balle exact et l'orientation de balle exacte en fonction au moins partiellement de la réflectance d'une ou de plusieurs zones de la balle (B).

4. Le récupérateur de balles (140) selon la revendication 1, dans lequel au moins un capteur (176, 186) comprend un capteur optique (176, 186) et/ou un capteur LIDAR (176, 186).

5. Le système de récupération de balles (140) selon la revendication 1, comprenant en outre au moins un dispositif d'éclairage (152) soutenu par le châssis (146) et configuré pour émettre une lumière non visible.

6. Le système de récupération de balles (140) selon la revendication 1, dans lequel le contrôleur (180) est en outre configuré pour générer une carte d'emplacement de balle à partir des informations concernant l'emplacement de dépôt de balle.

7. Un procédé (400) de récupération des balles à l'aide d'un système de récupération de balles (140) selon la revendication 1, le procédé (400) comprenant les étapes consistant à :
recevoir, par un contrôleur (180), des informations concernant l'emplacement de dépôt de balle ;
détecter, par au moins un capteur (176, 186), l'au moins une caractéristique de balle de la balle, l'au moins un capteur (176, 186) étant configuré pour fournir l'au moins un signal de caractéristique de balle ;
recevoir, par l'intermédiaire d'un contrôleur (180), l'au moins un signal de caractéristique de balle de l'au moins un capteur (176, 186) ;
identifier par l'intermédiaire du contrôleur (180), un emplacement de balle exact de la balle en fonction au moins en partie des informations concernant l'emplacement de dépôt de balle et de l'au moins un signal de caractéristique de balle provenant de l'au moins un capteur (176, 186) ;
identifier l'orientation de balle exacte (B) en fonction au moins partiellement de l'au moins un signal de caractéristique de balle provenant de l'au moins un capteur (176, 186), identifier l'orientation de balle exacte en identifiant initialement :
une surface ronde et une surface plate pour une balle ronde ; ou
un premier côté et un second côté dont la section transversale est inférieure à celle du premier côté pour une balle carrée
générer, à l'aide du contrôleur (180), le signal de commande de direction en fonction au moins en partie de l'emplacement de balle exact ; et
transmettre, à l'aide du contrôleur (180), le signal de commande de direction à l'ensemble de direction (148).
